# EUROPEAN PATENT APPLICATION

(11) **EP 2 610 756 A1**
(43) Date of publication of application: **03.07.2013**
(21) Application number: 10856444.4
(22) Date of filing: 27.08.2010
(51) Int. Cl.: G06F 13/00

(54) **SESSION ESTABLISHING APPARATUS, SESSION ESTABLISHING METHOD, AND SESSION ESTABLISHING PROGRAM**

(71) Applicant: Fujitsu Limited, Kawasaki-shi, Kanagawa 211-8588 (JP)
(72) Inventor: MASE, Tomonori, Kawasaki-shi Kanagawa 211-8588 (JP)
(74) Representative: HOFFMANN EITLE
(86) International application number: PCT/JP2010/064640
(87) International publication number: WO 2012/026042

(57) **Abstract**

A session establishing device (1) includes a storage (12) that stores therein establishment-finished information and under-establishment information in a manner associated with each other with respect to each session used by a terminal(2); an information determining unit(11) that, when having received a session start request from a terminal, determines whether under-establishment information corresponding to the session indicates not in the process of establishment when there is a session whose establishment-finished information indicates not-yet-established in the storage and there is a not-yet-established session; an assignment control unit(13) that, when the under-establishment information corresponding to the session indicates not in the process of establishment, assigns the session to the terminal which issued the session start request; and an information registering unit(14) that, when the session has been assigned to the terminal, registers session identifying information and terminal identifying information in a manner associated with the session and changes content of the under-establishment information corresponding to the session to in the process of establishment.

## Description

### [Field]

The present invention relates to a session establishing device, a session establishing method, and a session establishing program.

### [Background]

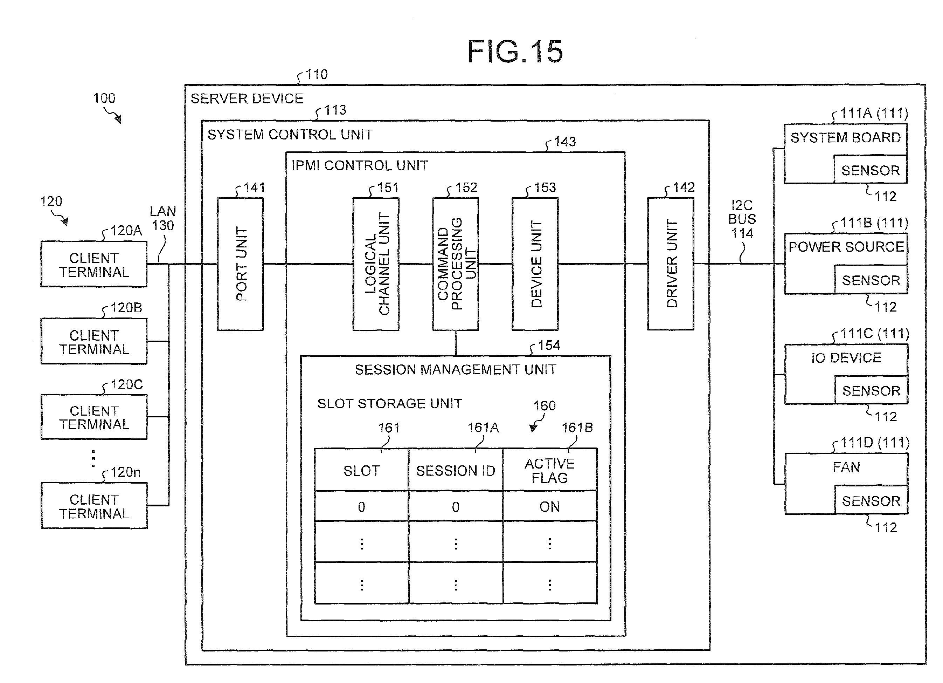

In recent years, there is known a server management system enabling a client terminal to manage state information of an internal device of a server device by using an intelligent platform management interface (hereinafter, referred to simply as "IPMI"). Incidentally, the IPMI is a standard interface allowing monitoring of state information of each internal device in the server device. FIG. 15 is a block diagram illustrating the server management system. A server management system 100 illustrated in FIG. 15 includes a server device 110, client terminals 120, and a local area network (LAN) 130 connecting between the server device 110 and the client terminal(s) 120.

The server device 110 contains internal devices 111, such as a system board 111A equipped with a central processing unit (CPU) and a memory, a power source 111B, an input-output (10) device 111C, and a fan 111D. The internal devices 111 each include a sensor 112 for detecting a state of the device. Furthermore, the server device 110 includes the multiple internal devices 111, a system control unit 113, and an I2C bus 114 connecting between the internal devices 111 and the system control unit 113. The system control unit 113 collects state information detected by the sensor 112 of each internal device 111 by using an IPMI. The client terminal 120 establishes a communication connection with the system control unit 113 via the LAN 130 by using an IPMI, thereby becoming able to monitor respective state information of the internal devices 111 in the server device 110.

The system control unit 113 includes a port unit 141, a driver unit 142, and an IPMI control unit 143. The port unit 141 is an interface connected to the LAN 130.
The driver unit 142 is an interface connected to the I2C bus 114. The IPMI control unit 143 includes a logical channel unit 151, a command processing unit 152, a device unit 153, and a session management unit 154.

The logical channel unit 151 is a unit that logically associates a channel to be used in communication between the port unit 141 and the command processing unit 152. Upon receipt of an IPMI-compliant command from the client terminal 120, the command processing unit 152 performs command processing corresponding to the command. Incidentally, commands include, for example, a command to collect state information detected by the sensor 112 of each internal device 111 and a command to change the setting of the sensor 112, etc. The device unit 153 is a unit that accesses various devices, such as the sensors 112, according to the command processing performed by the command processing unit 152.

Communication between the client terminal 120 and the IPMI control unit 143 is maintained on a per-session basis from the start of the communication to the cutoff of the communication. Incidentally, in a V1.5 IPMI, when successive two commands: Get Session Challenge and Activate Session are executed, a session between the client terminal 120 and the IPMI control unit 143 is put into an open state. Furthermore, in the IPMI, when Close Session is executed, the session between the client terminal 120 and the IPMI control unit 143 is put into a close state.

The session management unit 154 includes a slot storage unit 160 that stores therein a slot 161 of a session used by the client terminal 120. The slot storage unit 160 stores therein a session ID 161A for identifying a session used by the client terminal 120 and an Active flag 161B indicating whether the session has been established or not in a manner associated with each other with respect to each slot 161. Incidentally, the session having been established means the session between the client terminal 120 and the IPMI control unit 143 has been established.

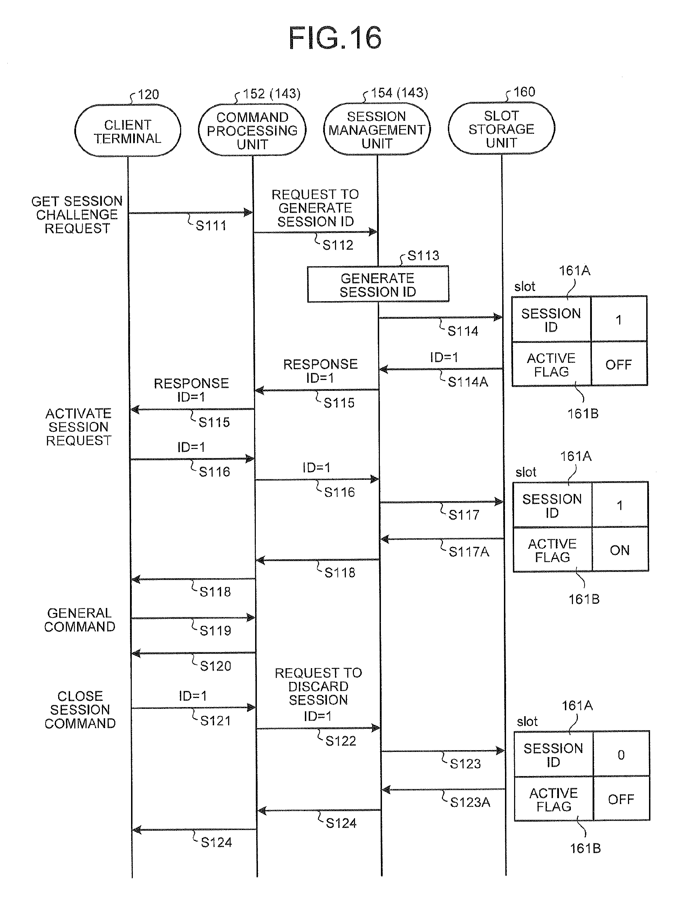

FIG. 16 is a sequence diagram illustrating a series of processing operation of the server management system 100 involved in the opening of a session and the closing of the session. The client terminal 120 issues a Get Session Challenge request, and notifies the command processing unit 152 of the Get Session Challenge request via the LAN 130 (Step S111). When having received the Get Session Challenge request, the command processing unit 152 requests the session management unit 154 to generate a new session ID identifying a session to be used (Step S112). When having received the request to generate a new session ID, the session management unit 154 generates a new session ID (Step S113). Furthermore, the session management unit 154 assigns a slot 161 whose Active flag 161B has been set to "OFF", and registers the new session ID in the slot 161 (Step S114). Namely, in the slot 161, for example, a new session ID 161A "1" and the Active flag 161B "OFF" are registered in a manner associated with each other.

Moreover, the session management unit 154 retrieves the new session ID registered in the slot 161 (Step S114A). Then, the session management unit 154 adds the new session ID into a Get Session Challenge response to the Get Session Challenge request, and sends the response to the client terminal 120 through the command processing unit 152 (Step S115). Incidentally, in an example of FIG. 16, the new session ID "1" registered at Step S114 is added into the Get Session Challenge response. The client terminal 120 notifies the session management unit 154 of an Activate Session request for establishment of the session, which is a succeeding request of the Get Session Challenge request, through the command processing unit 152 (Step S116). Incidentally, the session ID "1" added into the Get Session Challenge response is added into the Activate Session request.

When having received the Activate Session request, the session management unit 154 registers "ON" in the Active flag 161B of the slot 161 in which the session ID 161A added into the request has been registered (Step S117). Namely, in the slot 161, the session ID 161A "1" and the Active flag 161B "ON" are registered in a manner associated with each other.

Then, upon completion of the registration of the slot 161 (Step S117A), the session management unit 154 sends an Activate Session response to the Activate Session request to the client terminal 120 through the command processing unit 152 (Step S118). As a result, the session management unit 154 puts the session between the client terminal 120 and the IPMI control unit 143 into an open state.

After the session with an IPMI control unit 143 comes into the open state, the client terminal 120 issues a an IPMI-compliant general command via the LAN 130, and notifies the command processing unit 152 of the general command (Step S119). Incidentally, the general command is, for example, a command to collect state information detected by the sensor 112 of each internal device 111 or a command to change the setting of the sensor 112, etc. The command processing unit 152 performs command processing corresponding to the general command, and, upon completion of the execution of the command, sends a notification of the completion of the command execution to the client terminal 120 via the LAN 130 (Step S120).

To close the session currently being used, the client terminal 120 notifies the command processing unit 152 of a Close Session command added with the session ID via the LAN 130 (Step S121). When having received the Close Session command added with the session ID, the command processing unit 152 requests the session management unit 154 to discard the session ID from the slot 161 in which the corresponding session ID 161A has been registered (Step S122).

The session management unit 154 zeroes the session ID 161A in the slot 161 in response to the request to discard the session ID, and registers "OFF" in the corresponding Active flag 161B in the slot 161 (Step S123). Namely, in the slot 161, the session ID 161A "0" and the Active flag 161B "OFF" are registered in a manner associated with each other.

Upon completion of the registration of the slot 161 (Step S123A), the session management unit 154 sends a Close Session response to the Close Session command to the client terminal 120 through the command processing unit 152 and the LAN 130 (Step S124). As a result, the session management unit 154 puts the session between the client terminal 120 and the IPMI control unit 143 into a close state.

In the above-described server management system 100, sessions with multiple client terminals 120 can be managed by using multiple slots 161 in the slot storage unit 160.

### [Citation List]

### [Patent Citation]

Patent Literature 1: Japanese Laid-open Patent Publication No. 2007-201688
Patent Literature 2: Japanese Laid-open Patent Publication No. 2002-359637

### [Summary]

### [Technical Problem]

In the server management system 100, when the number of client terminals 120 accessing the IPMI control unit 143 is increased, while a session with a client terminal 120 is open, the other client terminals 120 may have a conflict of the opening of sessions.

For example, when having received a Get Session Challenge request from a client terminal 120A, the session management unit 154 assigns a slot "1" in which an Active flag 161B indicating "OFF" has been registered to the client terminal 120A. Furthermore, the session management unit 154 registers a new session ID in the slot "1". Namely, in the slot "1", a session ID 161A "1" and the Active flag 161B "OFF" are registered in a manner associated with each other.

It is assumed that the session management unit 154 has received a Get Session Challenge request from a client terminal 120B before receiving a succeeding Activate Session request of the previously-issued Get Session Challenge request from the client terminal 120A. At this time, the session management unit 154 has not yet received an Activate Session request from the client terminal 120A, so the Active flag 161B remains "OFF". Therefore, when the session management unit 154 has received the Get Session Challenge request from the client terminal 120B, the session management unit 154 reassigns the slot "1" whose Active flag 161B indicates "OFF" to the client terminal 120B. As a result, a session ID "1" to be used by the client terminal 120B is redundantly registered in the slot "1".

Namely, the session management unit 154 creates a conflict of sessions used by the client terminals 120A and 120B. In this state, if the session management unit 154 has received an Activate Session request from the client terminal 120B in advance of the client terminal 120A, the session management unit 154 puts a session of the session ID "1" with the client terminal 120B into an open state.
As a result, even when the session management unit 154 has received an Activate Session request from the client terminal 120A which issued the Get Session Challenge request before the client terminal 120B did, the session is being used by the client terminal 120B, so a session error occurs.

Namely, it transpires that even though the client terminal 120A issued the Get Session Challenge request before the client terminal 120B did, the session is intercepted by the client terminal 120B.

Accordingly, to cope with such a situation, it is conceivable that even if there is a conflict of Get Session Challenge requests from multiple client terminals 120, different slots are assigned to the client terminals 120, respectively. However, in this case, when the session management unit 154 has continuously received a Get Session Challenge request from one client terminal 120 due to failure or the like, each time the session management unit 154 has received a Get Session Challenge request from the client terminal 120, the session management unit 154 assigns the client terminal 120 a different slot every time. As a result, the number of sessions goes over the limits on session establishment.

The present invention has been made in view of the above, and an object of the present invention is to provide a session establishing device, a session establishing method, and a session establishing program capable of establishing a session smoothly even if there is a conflict of multiple requests for a session.

### [Solution to Problem]

According to an aspect, a session establishing device includes: a storage unit that stores therein establishment-finished information indicating whether a session has already been established or not and under-establishment information indicating whether a session is in the process of establishment or not in a manner associated with each other with respect to each session used by a terminal unit; an information determining unit that, when having received a session start request from a terminal unit, determines whether there is any session whose establishment-finished information indicates not-yet-established in the storage unit, and, when there is a not-yet-established session, determines whether under-establishment information corresponding to the session indicates not in the process of establishment; an assignment control unit that, when the under-establishment information corresponding to the session indicates not in the process of establishment, assigns the session to the terminal unit which issued the session start request; an information registering unit that, when the session has been assigned to the terminal unit which issued the session start request, registers session identifying information identifying the session and terminal identifying information identifying the terminal unit in a manner associated with the session and changes content of the under-establishment information corresponding to the session to in the process of establishment; and a control unit that, when having received a session execute request from a terminal unit, determines whether there is any session having session identifying information identical to session identifying information included in the session execute request in the storage unit, and, when there is a session having the same session identifying information, establishes a session with the terminal unit which issued the session execute request by using the session identifying information.

### [Advantageous Effects of Invention]

According to one aspect of a session establishing device discussed in the present application, it is possible to establish a session smoothly even if there is a conflict of multiple requests for a session.

### [Brief Description of Drawings]

FIG. 1 is a block diagram illustrating a session establishing device according to a first embodiment.
FIG. 2 is a block diagram illustrating a server management system according to a second embodiment.
FIG. 3 is an explanatory diagram illustrating a format of a Get Session Challenge request.
FIG. 4 is an explanatory diagram illustrating a format of a Get Session Challenge response.
FIG. 5 is an explanatory diagram illustrating a format of an Activate Session request.
FIG. 6 is an explanatory diagram illustrating a format of an Activate Session response.
FIG. 7 is an explanatory diagram illustrating a format of a Close Session command.
FIG. 8 is an explanatory diagram illustrating a format of a Close Session response.
FIG. 9 is a flowchart illustrating the processing operation of a session management unit involved in a Get Session Challenge request receiving process.
FIG. 10 is a flowchart illustrating the processing operation of the session management unit involved in an Activate Session request receiving process.
FIG. 11 is a flowchart illustrating the processing operation of the session management unit involved in a Close Session command receiving process.
FIG. 12 is a sequence diagram illustrating the processing operation of the server management system in the event of a conflict of the opening of sessions.
FIG. 13 is an explanatory diagram illustrating an example of a V2.0 IPMI session sequence.
FIG. 14 is an explanatory diagram illustrating a computer that executes a session establishing program.
FIG. 15 is a block diagram illustrating a server management system.
FIG. 16 is a sequence diagram illustrating a series of processing operation of the server management system involved in the opening of a session and the closing of the session.

### [Description of Embodiments]

Exemplary embodiments of a session establishing device, a session establishing method, and a session establishing program according to the present invention are explained in detail below with reference to accompanying drawings. Incidentally, the present invention is not limited to the embodiments.

### [First Embodiment]

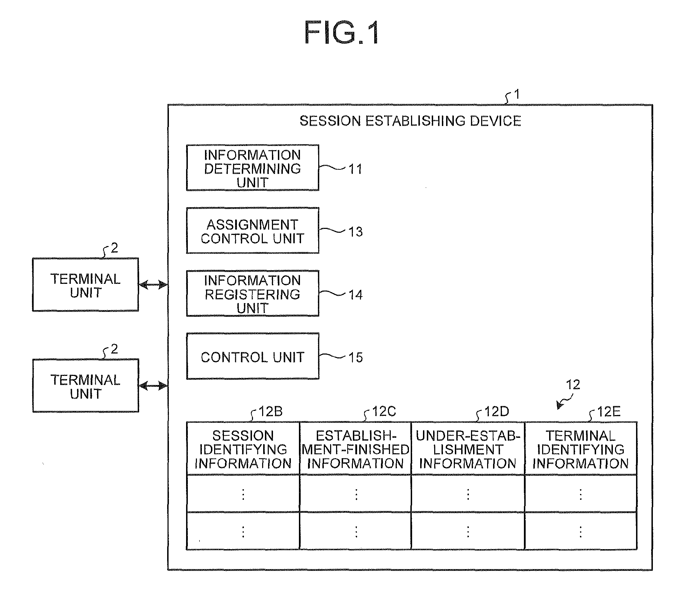

FIG. 1 is a block diagram illustrating a session establishing device according to a first embodiment. A session establishing device 1 illustrated in FIG. 1 can be connected to multiple terminal units 2. The session establishing device 1 includes an information determining unit 11, a storage unit 12, an assignment control unit 13, an information registering unit 14, and a control unit 15.

The storage unit 12 stores therein establishment-finished information 12C and under-establishment information 12D in a manner associated with each other with respect to each session used by a terminal unit 2. Incidentally, the establishment-finished information 12C is information indicating whether a session has already been established or not. The under-establishment information 12D is information indicating whether a session is in the process of establishment or not. Incidentally, in the process of establishment is in a state where the process for establishment of a session is ongoing and the session has not yet been established. On the other hand, already established is a state where a session has been established.

Upon receipt of a session start request from a terminal unit 2, the information determining unit 11 determines whether there is any session whose establishment-finished information 12C indicates not yet established in the storage unit 12. When there is a not-yet-established session in the storage unit 12, the information determining unit 11 further determines whether under-establishment information 12D corresponding to the session indicates not in the process of establishment.
When the under-establishment information 12D corresponding to the session indicates not in the process of establishment, the assignment control unit 13 assigns the session to the terminal unit 2 which issued the session start request.

On the other hand, when there is no session whose establishment-finished information 12C indicates not yet established in the storage unit 12, the assignment control unit 13 prohibits assignment of the session to the terminal unit 2 which issued the session start request. Furthermore, when the under-establishment information 12D corresponding to the session does not indicate not in the process of establishment, the assignment control unit 13 also prohibits assignment of the session to the terminal unit 2 which issued the session start request.

When the session has been assigned to the terminal unit 2 which issued the session start request, the information registering unit 14 registers session identifying information 12B identifying a session and terminal identifying information 12E identifying the terminal unit 2 which issued the session start request in the storage unit 12 in a manner associated with the assigned session. Furthermore, the information registering unit 14 changes content of the under-establishment information 12D corresponding to the session to in the process of establishment.

Upon receipt of a session execute request from a terminal unit 2, the control unit 15 determines whether there is any session having session identifying information 12B identical to session identifying information included in the session execute request in the storage unit 12.
When a session having the same session identifying information has been registered in the storage unit 12, the control unit 15 establishes a session with the terminal unit 2 which issued the session execute request by using the session identifying information.

On the other hand, when there is no session having the same session identifying information in the storage unit 12, the control unit 15 prohibits establishment of a session with the terminal unit 2 which issued the session execute request by using the session identifying information.

In the first embodiment, upon receipt of a session start request from a terminal unit 2, the session establishing device 1 determines whether there is any session whose establishment-finished information 12C indicates session not yet established in the storage unit 12. When there is a not-yet-established session in the storage unit 12, the session establishing device 1 further determines whether under-establishment information 12D corresponding to the session indicates not in the process of establishment. When the under-establishment information 12D corresponding to the session in the storage unit 12 indicates not in the process of establishment, the session establishing device 1 assigns the session in the storage unit 12 to the terminal unit 2 which issued the session start request. Furthermore, in the first embodiment, the session establishing device 1 registers session identifying information 12B of the session and terminal identifying information 12E of the terminal unit 2 in a manner associated with the assigned session, and changes content of the under-establishment information 12D corresponding to the assigned session to in the process of establishment.

For example, when the establishment-finished information 12C which has been registered in the storage unit 12 indicates session not yet established and when the under-establishment information 12D indicates not in the process of establishment, the assignment control unit 13 assigns the session registered in the storage unit 12 to the terminal unit 2 which issued the session start request. On the other hand, when the establishment-finished information 12C indicates session already established or when the under-establishment information 12D indicates in the process of establishment, the assignment control unit 13 prohibits assignment of the session which has been registered in the storage unit 12 to the terminal unit 2 which issued the session start request.

Namely, the session establishing device 1 controls assignment of a session to a terminal unit 2 which issued a session start request on the basis of a result of reference to establishment-finished information 12C and under-establishment information 12D of each session. Consequently, the session establishing device 1 can avoid redundant assignment of the same session to multiple terminal units 2 having a conflict of session start requests.

Furthermore, in the first embodiment, upon receipt of a session execute request from a terminal unit 2, the session establishing device 1 determines whether there is any session whose session identifying information 12B is identical to session identifying information included in the session execute request in the storage unit 12. Furthermore, in the first embodiment, when there is a session having the same session identifying information in the storage unit 12, the session establishing device 1 establishes a session with the terminal unit 2 which issued the session execute request by using the session identifying information. Consequently, the session establishing device 1 avoids redundant assignment of the same session to multiple terminal units 2 having a conflict of session start requests, and therefore can avoid a situation where even though a terminal unit 2 issued a session start request first, a session is intercepted by another terminal unit 2 which requested later. Then, the session establishing device 1 can achieve smooth session establishment.

### [Second Embodiment]

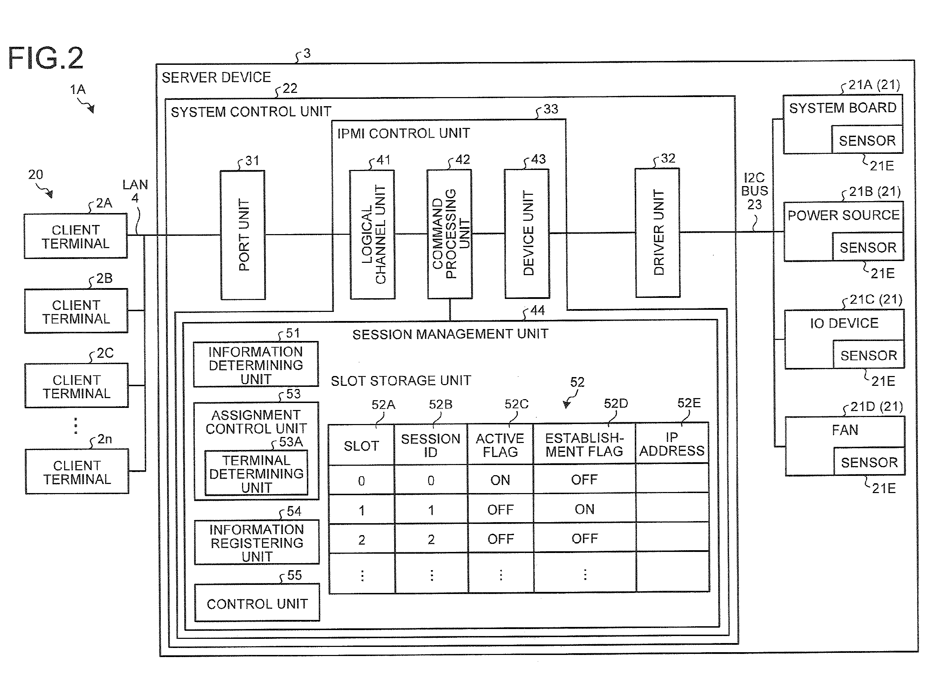

FIG. 2 is a block diagram illustrating a server management system according to a second embodiment. A server management system 1A illustrated in FIG. 2 includes a server device 3, multiple client terminals 20, and a LAN 4 connecting between the server device 3 and the client terminals 20. The server management system 1A enables the client terminals 20 to manage state information of an internal device of the server device 3 by using an IPMI.

The server device 3 includes multiple internal devices 21, a system control unit 22, and an I2C bus 23 connecting between the internal devices 21 and the system control unit 22. The internal devices 21 are, for example, a system board 21A equipped with a CPU and a memory, a power source 21B, an IO device 21C, and a fan 21D, etc.
The internal devices 21 each contain a sensor 21E for detecting a state of the device.

The system control unit 22 collects state information detected by the sensor 112 of each internal device 21 by using an IPMI. Each of the client terminals 20 establishes a communication connection with the system control unit 22 via the LAN 4 by using an IPMI, thereby becoming able to monitor respective state information of the internal devices 21 in the server device 3.

The system control unit 22 includes a port unit 31, a driver unit 32, and an IPMI control unit 33. The port unit 31 is an interface connected to the LAN 4. The driver unit 32 is an interface connected to the I2C bus 23. The IPMI control unit 33 includes a logical channel unit 41, a command processing unit 42, a device unit 43, and a session management unit 44. The logical channel unit 41 is a unit that logically associates a channel to be used in communication between the port unit 31 and the command processing unit 42. Upon receipt of an IPMI-compliant command from a client terminal 20, the command processing unit 42 performs command processing corresponding to the command. Incidentally, commands include, for example, a command to collect state information detected by the sensor 21E of each internal device 21 and a command to change the setting of the sensor 21E, etc. The device unit 43 is a unit that accesses various devices, such as the sensors 21E, according to the command processing performed by the command processing unit 42.

Communication between the client terminal 20 and the IPMI control unit 33 is maintained on a per-session basis from the start of the communication to the cutoff of the communication. Incidentally, in a V1.5 IPMI, when successive two commands: Get Session Challenge and Activate Session are executed, a session between the client terminal 20 and the IPMI control unit 33 is put into an open state. Furthermore, in the IPMI, when Close Session is executed, the session between the client terminal 20 and the IPMI control unit 33 is put into a close state.

The session management unit 44 includes an information determining unit 51, a slot storage unit 52, an assignment control unit 53, an information registering unit 54, and a control unit 55. The session management unit 44 responds to a Get Session Challenge request from a client terminal 20, and after that, the session management unit 44 responds to an Activate Session request from the client terminal 20, and then puts a session with the client terminal 20 into an open state.

The slot storage unit 52 stores therein a session ID 52B, an Active flag 52C, an Establishment flag 52D, and an IP address 52E in a manner associated with one another with respect to each slot 52A assigned to a session used by a client terminal 20. The session ID 52B is an ID for identifying a session used by a client terminal 20. The Active flag 52C is a flag indicating whether the session used by the client terminal 20 has been opened, i.e., whether the session has been established. When the session has been established, the Active flag 52C is set to "ON"; when the session has not been established, the Active flag 52C is set to "OFF".

The Establishment flag 52D is a flag indicating whether the session used by the client terminal 20 is in the process of establishment before the session is opened. Incidentally, in the process of establishment is in a state where a process performed before the session is opened, i.e., a Get Session Challenge request receiving process to be described later has been completed, and Activate Session to be described later has not yet been completed. When the session is in the process of establishment, the Establishment flag 52D is set to "ON"; when the session is not in the process of establishment, the Establishment flag 52D is set to "OFF". The IP address 52E is terminal identifying information for identifying the client terminal 20.

Upon receipt of a Get Session Challenge request from a client terminal 20, the information determining unit 51 sequentially refers to slots in the slot storage unit 52, and determines whether an Active flag 52C which has been registered in the referred-to slot is "OFF". When the Active flag 52C which has been registered in the referred-to slot is "OFF", the information determining unit 51 determines whether an Establishment flag 52D which has been registered in the referred-to slot is "OFF". On the other hand, when the Active flag 52C which has been registered in the referred-to slot is "ON", the information determining unit 51 determines that the referred-to slot is in use, and searches for a slot which has not yet been referred to.

Furthermore, when the Establishment flag 52D which has been registered in the referred-to slot is "OFF", the assignment control unit 53 assigns the slot to the client terminal 20 which issued the Get Session Challenge request. On the other hand, when the Establishment flag 52D which has been registered in the referred-to slot is "ON", the assignment control unit 53 identifies the success or failure of slot assignment to the client terminal 20 which issued the request by using an IP address 52E which has been registered in the referred-to slot and an IP address of the client terminal 20.

When the slot has been assigned to the client terminal 20 which issued the Get Session Challenge request, the information registering unit 54 registers a session ID 52B of the session and an IP address 52E of the client terminal 20 in a manner associated with the session. Furthermore, the information registering unit 54 changes content of the Establishment flag 52D of the slot to "ON".

Upon receipt of an Activate Session request from a client terminal 20, the control unit 55 sequentially refers to slots in the slot storage unit 52. Furthermore, the control unit 55 determines whether a session ID 52B which has been registered in the referred-to slot is identical to a session ID included in the Activate Session request. When it is the same session ID, the control unit 55 puts a session with the client terminal 20 which issued the Activate Session request by using the session of the session ID into an open state.

When the session ID 52B which has been registered in the referred-to slot is not identical to the session ID included in the Activate Session request, the control unit 55 prohibits the opening of a session with the client terminal 20 which executed the Activate Session request by using the session of the session ID.

When the session ID 52B which has been registered in the referred-to slot is identical to the session ID included in the Activate Session request, the information registering unit 54 registers "OFF" in an Establishment flag 52D of the referred-to slot. Furthermore, the information registering unit 54 registers "ON" in an Active flag 52C of the referred-to slot.

The assignment control unit 53 includes a terminal determining unit 53A. The terminal determining unit 53A refers to an arbitrary slot upon receipt of a Get Session Challenge request. When an Establishment flag 52D which has been registered in the referred-to slot is "ON", the terminal determining unit 53A determines whether an IP address 52E which has been registered in the referred-to slot is identical to an IP address of a client terminal 20 which issued the Get Session Challenge request.

When the terminal determining unit 53A has determined that it is the same IP address, the assignment control unit 53 determines that the client terminal 20 again issued a Get Session Challenge request with Activate Session unfinished. Furthermore, the assignment control unit 53 reassigns the slot to the client terminal 20 which issued the Get Session Challenge request. On the other hand, when the terminal determining unit 53A has determined that it is not the same IP address, the assignment control unit 53 prohibits assignment of the slot to the client terminal 20 which issued the Get Session Challenge request.

Upon receipt of a Close Session command from a client terminal 20, the control unit 55 sequentially refers to slots in the slot storage unit 52. Furthermore, the control unit 55 determines whether a session ID 52B which has been registered in the referred-to slot is identical to a session ID included in the Close Session command. When it is the same session ID, the control unit 55 cuts off the session with the client terminal 20 corresponding to the session ID 52B which has been registered in the referred-to slot. When there is a slot in which the session ID 52B included in the received Close Session command has been registered, the information registering unit 54 zeroes a session ID 52B and an IP address 52E which have been registered in the slot. Furthermore, the information registering unit 54 registers "OFF" in an Active flag 52C of the slot.

On the other hand, when it is not the same session ID, the control unit 55 determines that the referred-to slot is not a slot for the client terminal 20 which issued the Close Session command, and refers to another slot which has not yet been referred to.

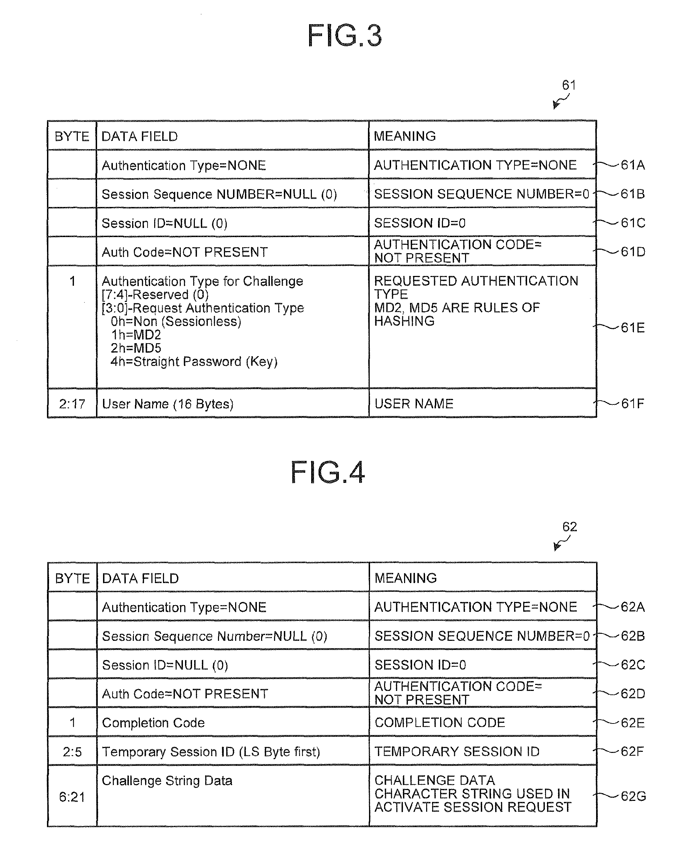

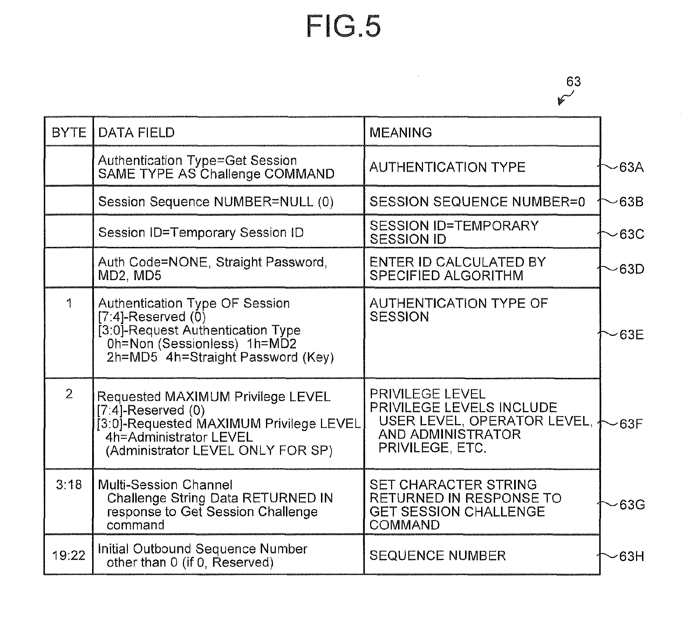

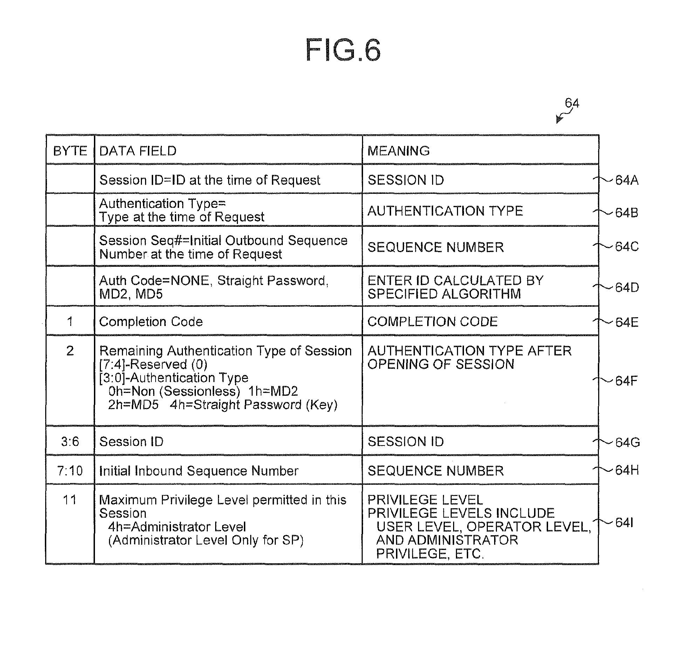

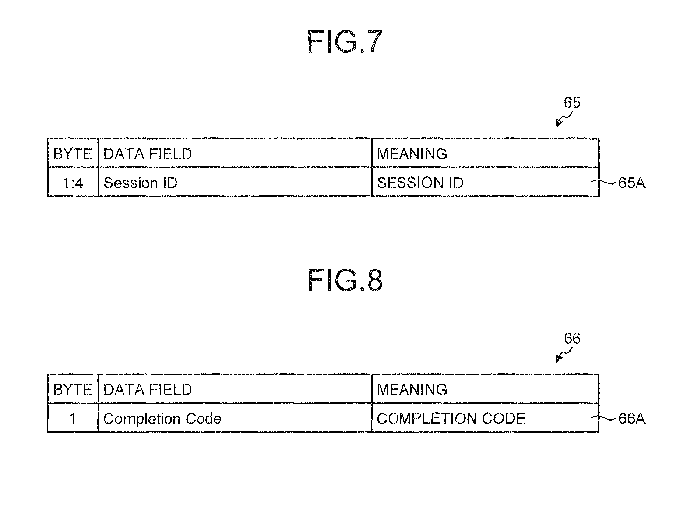

Subsequently, formats of session commands used in the IPMI are explained with reference to FIGS. 3 to 8. FIG. 3 is an explanatory diagram illustrating a format of a Get Session Challenge request; FIG. 4 is an explanatory diagram illustrating a format of a Get Session Challenge response; FIG. 5 is an explanatory diagram illustrating a format of an Activate Session request. Furthermore, FIG. 6 is an explanatory diagram illustrating a format of an Activate Session response; FIG. 7 is an explanatory diagram illustrating a format of a Close Session command; FIG. 8 is an explanatory diagram illustrating a format of a Close Session response.

A Get Session Challenge request 61 illustrated in FIG. 3 includes presence or absence of an authentication type 61A, a session sequence number 61B, a session ID 61C, presence or absence of an authentication code 61D, a requested authentication type 61E, and a user name 61F, etc. Incidentally, Byte corresponds to a storage number of byte to store data. The presence or absence of an authentication type 61A, the session sequence number 61B, the session ID 61C, and the presence or absence of an authentication code 61D are stored in Byte "0". The requested authentication type 61E is stored in Byte "1". The user name 61F is stored in Bytes "2" to "17".

A Get Session Challenge response 62 illustrated in FIG. 4 includes presence or absence of an authentication type 62A, a session sequence number 62B, a session ID 62C, and presence or absence of an authentication code 62D. The Get Session Challenge response 62 further includes a completion code 62E, a temporary session ID 62F, and challenge data 62G, etc. Incidentally, the temporary session ID 62F corresponds to a session ID that is newly assigned to a client terminal 20 which has executed a Get Session Challenge request and is used in an Activate Session request. The challenge data 62G corresponds to a character string used in an Activate Session request. The presence or absence of an authentication type 62A, the session sequence number 62B, the session ID 62C, and the presence or absence of an authentication code 62D are stored in Byte "0". The completion code 62E is stored in Byte "1". The temporary session ID 62F is stored in Bytes "2" to "5". The challenge data 62G is stored in Bytes "6" to "21".

An Activate Session request 63 illustrated in FIG. 5 includes an authentication type 63A, a session sequence number 63B, a session ID (temporary session ID) 63C, and an ID 63D calculated by a specified algorithm. Incidentally, the session ID 63C corresponds to the temporary session ID 62F obtained from the Get Session Challenge response 62. The Activate Session request 63 further includes an authentication type 63E of a session, a privilege level 63F, a character string 63G, and a sequence number 63H, etc. Incidentally, the character string 63G corresponds to a character string in the challenge data 62G included in the Get Session Challenge response 62. Incidentally, the authentication type 63A, the session sequence number 63B, the session ID 63C, and the ID 63D calculated by the specified algorithm are stored in Byte "0". The authentication type 63E of a session is stored in Byte "1". The privilege level 63F is stored in Byte "2". The character string 63G is stored in Bytes "3" to "18". The sequence number 63H is stored in Bytes "19" to "22".

An Activate Session response 64 illustrated in FIG. 6 includes a session ID 64A, an authentication type 64B, a sequence number 64C, an ID 64D calculated by a specified algorithm, and a completion code 64E indicating completion of the opening of a session. Incidentally, the session ID 64A corresponds to a session ID requested in an Activate Session request. The Activate Session response 64 further includes an authentication type 64F after the opening of the session, a session ID 64G, a sequence number 64H, and a privilege level 64I, etc. Incidentally, the session ID 64A, the authentication type 64B, the sequence number 64C, and the ID 64D calculated by the specified algorithm are stored in Byte "0". The completion code 64E is stored in Byte "1". The authentication type 64F after the opening of the session is stored in Byte "2". The session ID 64G is stored in Bytes "3" to "6". The sequence number 64H is stored in Bytes "7" to "10". The privilege level 64I is stored in Byte "11".

A Close Session command 65 illustrated in FIG. 7 includes a session ID 65A of a session to be closed. Incidentally, the session ID 65A of the session to be closed is stored in Bytes "1" to "4". A Close Session response 66 illustrated in FIG. 8 includes a completion code 66A indicating completion of the closing of a session. Incidentally, the completion code 66A is stored in Byte "1".

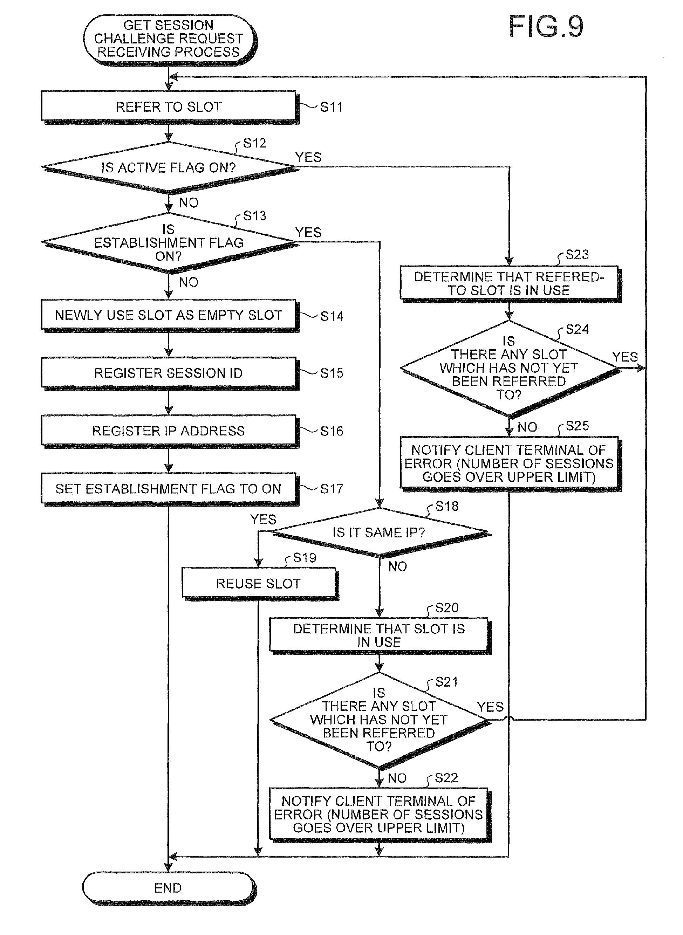

Subsequently, the operation of the server management system 1A according to the second embodiment is explained. FIG. 9 is a flowchart illustrating the processing operation of the session management unit 44 involved in a Get Session Challenge request receiving process. The Get Session Challenge request receiving process illustrated in FIG. 9 is a process to perform preprocessing before the opening of a session in response to a Get Session Challenge request received from a client terminal 20. In FIG. 9, the information determining unit 51 of the session management unit 44 sequentially refers to slots in the slot storage unit 52 (Step S11), and determines whether an Active flag 52C which has been registered in the referred-to slot is "ON" (Step S12).
When the Active flag 52C of the referred-to slot is not "ON" (NO at Step S12), i.e., when the Active flag 52C is "OFF", the information determining unit 51 determines whether an Establishment flag 52D which has been registered in the referred-to slot is "ON" (Step S13).

When the Establishment flag 52C which has been registered in the referred-to slot is not "ON" (NO at Step S13), i.e., when the Establishment flag 52C is "OFF", the assignment control unit 53 uses the referred-to slot as an empty slot (Step S14). The information registering unit 54 of the session management unit 44 registers a new session ID 52B in the empty slot (Step S15), and further registers an IP address 52E identifying the client terminal 20 in the slot (Step S16). Furthermore, the information registering unit 54 changes the Establishment flag 52D in the slot from "OFF" to "ON" (Step S17), and the session management unit 44 ends the processing operation in FIG. 9.

When the Establishment flag 52D in the referred-to slot is "ON" (YES at Step S13), the terminal determining unit 53A determines whether an IP address of the client terminal 20 is identical to an IP address which has been registered in the referred-to slot (Step S18). When it is the same IP address (YES at Step S18), the assignment control unit 53 determines that the client terminal 20 again issued a Get Session Challenge request with Activate Session unfinished. Furthermore, when having determined that the client terminal 20 again issued a Get Session Challenge request with Activate Session unfinished, the assignment control unit 53 reuses the referred-to slot for the client terminal 20 (Step S19), and the session management unit 44 ends the processing operation in FIG. 9. Incidentally, it is possible to avoid a situation where multiple referred-to slots are assigned to the client terminal 20 which again issued a Get Session Challenge request with Activate Session unfinished.

On the other hand, when it is not the same IP address (NO at Step S18), the assignment control unit 53 determines that the referred-to slot is being used by another client terminal 20 (Step S20), and determines whether there is any slot which has not yet been referred to in the slot storage unit 52 (Step S21). When the assignment control unit 53 has determined that there is a slot which has not yet been referred to (YES at Step S21), the process flow moves onto Step S11 to refer to the slot which has not yet been referred to. On the other hand, when there is no slot which has not yet been referred to (NO at Step S21), the assignment control unit 53 notifies the client terminal 20 of an error message indicating that the number of sessions goes over an upper limit to which a session can be established (Step S22), and the session management unit 44 ends the processing operation in FIG. 9.

When the Active flag 52C which has been registered in the referred-to slot is "ON" (YES at Step S12), the assignment control unit 53 determines that the referred-to slot is being used by another client terminal 20 (Step S23). Then, the assignment control unit 53 determines whether there is any slot which has not yet been referred to in the slot storage unit 52 (Step S24). When the assignment control unit 53 has determined that there is a slot which has not yet been referred to (YES at Step S24), the process flow moves onto Step S11 to refer to the slot which has not yet been referred to. On the other hand, when there is no slot which has not yet been referred to (NO at Step S24), the assignment control unit 53 notifies the client terminal 20 of an error message indicating that the number of sessions goes over the upper limit (Step S25), and the session management unit 44 ends the processing operation in FIG. 9.

In the Get Session Challenge request receiving process illustrated in FIG. 9, when the session management unit 44 has received a Get Session Challenge request, the session management unit 44 assigns a slot in which "OFF" has been registered in an Active flag 52C and "OFF" has been registered in an Establishment flag 52D to a client terminal 20 which issued the Get Session Challenge request. Furthermore, in the Get Session Challenge request receiving process, the session management unit 44 registers a session ID 52B and an IP address 52E in the slot assigned to the client terminal 20, and registers "ON" in the Active flag 52C of the slot.

For example, in a case of a slot in which "OFF" has been registered in an Active flag 52C and "OFF" has been registered in an Establishment flag 52D, the assignment control unit 53 assigns the slot to a client terminal 20 which issued a Get Session Challenge request. On the other hand, in a case of a slot in which "ON" has been registered in an Active flag 52C, the assignment control unit 53 prohibits assignment of the slot to a client terminal 20 which issued a Get Session Challenge request. Namely, the server device 3 controls assignment of a slot to a client terminal 20 which issued a Get Session Challenge request on the basis of a result of reference to an Active flag 52C and an Establishment flag 52D of each slot. Consequently, the server device 3 can avoid redundant assignment of the same slot to multiple client terminals 20 having a conflict of Get Session Challenge requests.

Furthermore, when the session management unit 44 has received a Get Session Challenge request, if an Active flag 52C of a slot is "OFF" and an Establishment flag 52D is "ON", the session management unit 44 determines whether an IP address which has been registered in the slot is identical to an IP address of a client terminal 20 which issued the Get Session Challenge request. Namely, even if the server device 3 has again received a Get Session Challenge request from the same client terminal 20 before completion of Activate Session, the server device 3 reuses the slot which has been assigned to the client terminal 20. Consequently, the server device 3 can avoid a situation where multiple slots are sequentially assigned to the same client terminals 20.

Moreover, when the IP address which has been registered in the slot is not identical to the IP address of the client terminal 20 which issued the Get Session Challenge request, the server device 3 assigns another slot to the client terminal 20 which issued the request. Consequently, the server device 3 can avoid a situation where multiple client terminals 20 having a conflict of Get Session Challenge requests are assigned the same slot.

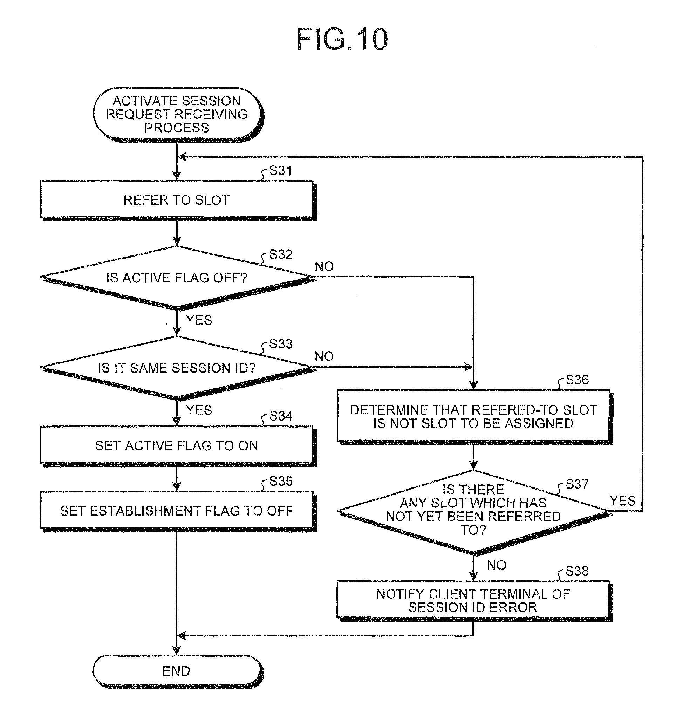

FIG. 10 is a flowchart illustrating the processing operation of the session management unit 44 involved in an Activate Session request receiving process. The Activate Session request receiving process illustrated in FIG. 10 is a process to put a session into an open state in response to an Activate Session request from a client terminal 20. In FIG. 10, the control unit 55 refers to a slot in the slot storage unit 52 (Step S31), and determines whether an Active flag 52C which has been registered in the referred-to slot is "OFF" (Step S32).

When the Active flag 52C is "OFF" (YES at Step S32), the control unit 55 determines whether a session ID 52B which has been registered in the referred-to slot is identical to a session ID added into the Activate Session request (Step S33).

When it is the same session ID (YES at Step S33), the information registering unit 54 registers "ON" in the Active flag 52C which has been registered in the referred-to slot (Step S34). Furthermore, the information registering unit 54 registers "OFF" in an Establishment flag 52D which has been registered in the referred-to slot (Step S35), and the session management unit 44 ends the processing operation in FIG. 10. Consequently, the control unit 55 puts the session with the client terminal 20 which issued the Activate Session request into an open state.

On the other hand, when the session ID 52B which has been registered in the referred-to slot is not identical to the session ID added into the Activate Session request (NO at Step S33), the control unit 55 determines that the referred-to slot is not a slot to be assigned to the client terminal 20 which issued the Activate Session request (Step S36). Then, when having determined that the referred-to slot is not a slot to be assigned, the control unit 55 determines whether there is any slot which has not yet been referred to in the slot storage unit 52 (Step S37). When there is a slot which has not yet been referred to (YES at Step S37), the control unit 55 moves onto Step S31 to refer to the slot which has not yet been referred to.

On the other hand, when there is no slot which has not yet been referred to (NO at Step S37), the control unit 55 notifies the client terminal 20 of a session ID error relating to the Activate Session request (Step S38), and the session management unit 44 ends the processing operation in FIG. 10. Furthermore, when the Active flag 52C is not "OFF" (NO at Step S32), the control unit 55 moves onto Step S36.

In the Activate Session request receiving process illustrated in FIG. 10, when the session management unit 44 has received an Activate Session request from a client terminal 20, the session management unit 44 determines whether a session ID included in the request is identical to a session ID 52B which has been registered in a referred-to slot. When it is the same session ID, the session management unit 44 puts a session with the client terminal 20 using a corresponding session into an open state. Furthermore, in the Activate Session request receiving process, when it is not the same session ID, the session management unit 44 does not open a session with the client terminal 20 using a corresponding session. Consequently, the server device 3 can avoid a situation where multiple client terminals 20 having a conflict of Get Session Challenge requests are assigned the same slot, thereby avoiding a situation where even though a client terminal 20 issued a Get Session Challenge request first, a session is intercepted by another client terminal 20 which requested later. Then, the server management system 1A can achieve the smooth opening of a session.

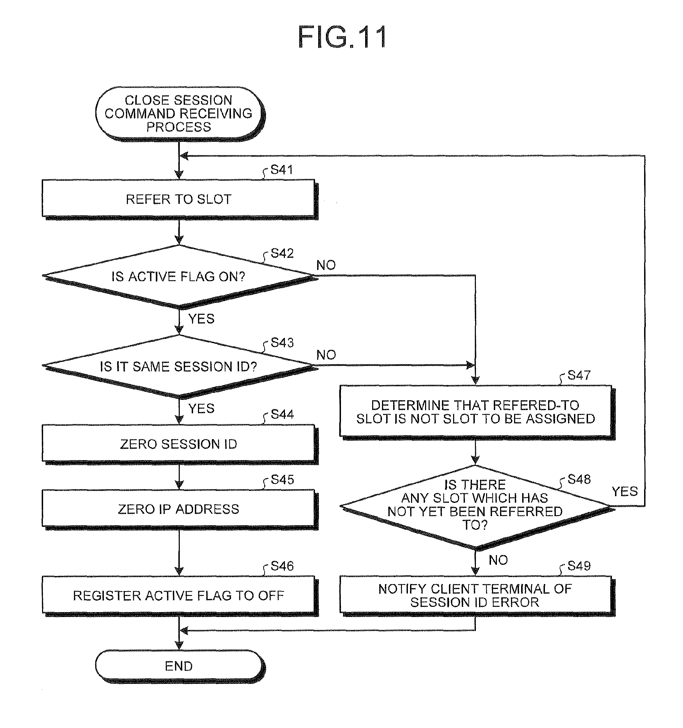

FIG. 11 is a flowchart illustrating the processing operation of the session management unit 44 involved in a Close Session command receiving process. The Close Session command receiving process illustrated in FIG. 11 is a process to put a session with a client terminal 20 into a close state in response to a Close Session command from the client terminal 20. In FIG. 11, upon receipt of the Close Session command, the control unit 55 refers to a slot in the slot storage unit 52 (Step S41), and determines whether an Active flag 52C which has been registered in the referred-to slot is "ON" (Step S42). When the Active flag 52C of the referred-to slot is "ON" (YES at Step S42), the control unit 55 determines whether a session ID 52B which has been registered in the referred-to slot is identical to a session ID added into the Close Session command (Step S43).

When it is the same session ID (YES at Step S43), the information registering unit 54 zeroes the session ID 52B which has been registered in the referred-to slot (Step S44). Furthermore, the information registering unit 54 zeroes an IP address 52E which has been registered in the referred-to slot (Step S45). Moreover, the information registering unit 54 registers "OFF" in the Active flag 52C of the referred-to slot (Step S46), and the session management unit 44 ends the processing operation in FIG. 11. Consequently, the control unit 55 puts the session with the client terminal 20 which issued the Close Session command into a close state.

On the other hand, when the Active flag 52C of the referred-to slot is not "ON" (NO at Step S42), the control unit 55 determines that the referred-to slot is not a slot to be assigned to the client terminal 20 which issued the Close Session command (Step S47). Then, the control unit 55 determines whether there is any slot which has not yet been referred to in the slot storage unit 52 (Step S48). When there is no slot which has not yet been referred to (NO at Step S48), the control unit 55 notifies the client terminal 20 of a session ID error relating to the Close Session command (Step S49), and the session management unit 44 ends the processing operation in FIG. 11.

On the other hand, when there is a slot which has not yet been referred to (YES at Step S48), the control unit 55 moves onto Step S41 to refer to the slot which has not yet been referred to. Furthermore, when the session ID 52B which has been registered in the referred-to slot is not identical to the session ID added into the Close Session command (NO at Step S43), the control unit 55 moves onto Step S47 to determine that the referred-to slot is not a slot to be assigned.

In the Close Session command receiving process illustrated in FIG. 11, a session with a client terminal 20 which issued a Close Session command is put into a close state in response to the command.

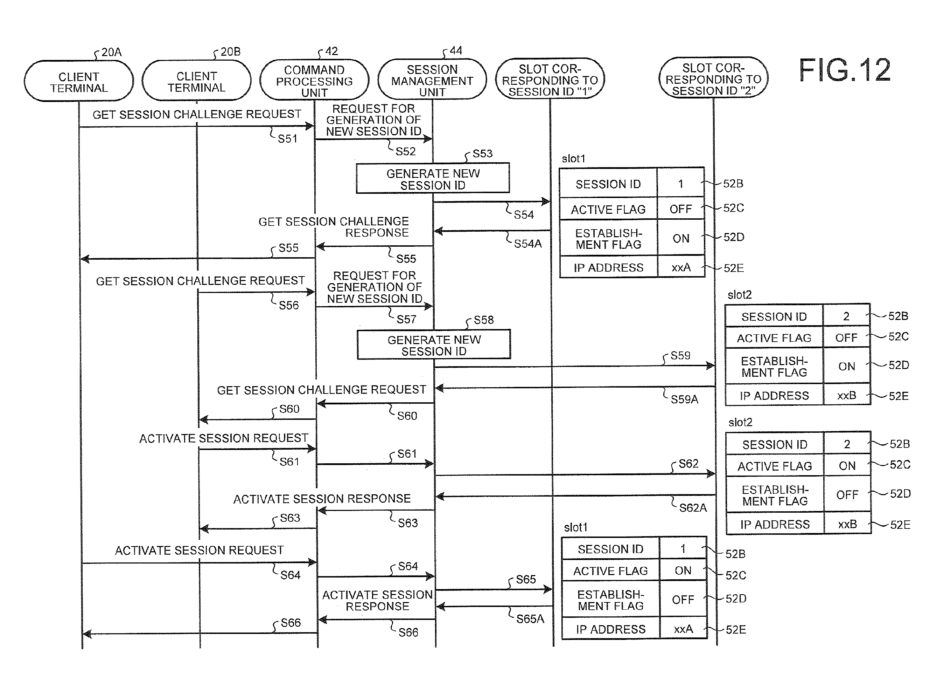

FIG. 12 is a sequence diagram illustrating the processing operation of the server management system 1A in the event of a conflict of the opening of sessions. Incidentally, for convenience of explanation, it is assumed that there is a conflict of Get Session Challenge requests from client terminals 20A and 20B. The client terminal 20A issues a Get Session Challenge request, and notifies the command processing unit 42 of the Get Session Challenge request via the LAN 4 (Step S51). When having received the Get Session Challenge request from the client terminal 20A, the command processing unit 42 requests the session management unit 44 to generate a new session ID of a session to be used (Step S52).

When having received the request for generation of a new session ID, the session management unit 44 generates a new session ID (Step S53). Furthermore, the session management unit 44 assigns an empty slot "1" whose Active flag 52C and Establishment flag 52D are both "OFF" to the client terminal 20A which issued the Get Session Challenge request. Moreover, the information registering unit 54 registers "xxA", an IP address 52E of the client terminal 20A which issued the Get Session Challenge request, and "1", a new session ID 52B, in the empty slot "1" (Step S54). Furthermore, the information registering unit 54 registers "ON" in the Establishment flag 52D of the empty slot "1" (Step S54). Namely, the information registering unit 54 registers the IP address 52E "xxA", the new session ID 52B "1", and the Establishment flag 52D "ON" in the empty slot "1". As a result, the slot "1" becomes a slot corresponding to the session ID "1" that the client terminal 20A uses.

The session management unit 44 retrieves the new session ID "1" registered in the slot "1" (Step S54A). Then, the session management unit 44 sends a Get Session Challenge response to the Get Session Challenge request to the client terminal 20A (Step S55). Incidentally, in an example of FIG. 12, the new session ID "1" registered at Step S54 is added into the Get Session Challenge response.

Then, before the client terminal 20A issues a succeeding Activate Session request of the Get Session Challenge request, the client terminal 20B issues a Get Session Challenge request, and notifies the command processing unit 42 of the Get Session Challenge request via the LAN 4 (Step S56). When having received the Get Session Challenge request from the client terminal 20B, the command processing unit 42 requests the session management unit 44 to generate a new session ID of a session to be used (Step S57).

When having received the request for generation of a new session ID, the session management unit 44 generates a new session ID (Step S58). Furthermore, the assignment control unit 53 prohibits assignment of the empty slot "1" to the client terminal 20B which issued the Get Session Challenge request because the Establishment flag 52D which has been registered in the slot "1" assigned to the client terminal 20A is "ON". Consequently, the assignment control unit 53 assigns an empty slot "2" whose Active flag 52C and Establishment flag 52D are both "OFF" to the client terminal 20B which issued the Get Session Challenge request. The information registering unit 54 registers "xxB", an IP address 52E of the client terminal 20B which issued the Get Session Challenge request, and "2", a new session ID 52B, in the empty slot "2" (Step S59). Furthermore, the information registering unit 54 registers "ON" in the Establishment flag 52D of the empty slot "2" (Step S59). Namely, the information registering unit 54 registers the IP address 52E "xxB", the new session ID 52B "2", and the Establishment flag 52D "ON" in the empty slot "2". As a result, the slot "2" becomes a slot corresponding to the session ID "2" that the client terminal 20B uses.

The session management unit 44 retrieves the new session ID "2" registered in the slot "2" (Step S59A). Then, the session management unit 44 sends a Get Session Challenge response to the Get Session Challenge request to the client terminal 20B (Step S60). Incidentally, in the example of FIG. 12, the new session ID "2" registered at Step S59 is added into the Get Session Challenge response. As a result, a conflict between the Get Session Challenge requests is caused by the client terminals 20A and 20B.

At this time, it is assumed that the client terminal 20B issues an Activate Session request in advance of the client terminal 20A, and notifies the session management unit 44 of the Activate Session request through the command processing unit 42 (Step S61). Incidentally, when issuing an Activate Session request, the client terminal 20B adds the session ID "2" added into the Get Session Challenge response into the Activate Session request.

When having received the Activate Session request from the client terminal 20B, the information registering unit 54 refers to the slot "2" in which the session ID "2" added into the request has been registered (Step S62). Furthermore, the information registering unit 54 registers "ON" in the Active flag 52C of the referred-to slot "2", and registers "OFF" in the Establishment flag 52D (Step S62).

In the slot "2", the session ID 52B "2", the Active flag 52C "ON", the Establishment flag 52D "OFF", and the IP address 52E "xxB" of the client terminal 20B are registered in a manner associated with one another (Step S62). Then, upon completion of the registration of the slot "2" (Step S62A), the control unit 55 sends an Activate Session response to the Activate Session request to the client terminal 20B through the command processing unit 42 (Step S63). As a result, the control unit 55 puts the session of the session ID "2" with the client terminal 20B into an open state.

Then, after the Activate Session requested by the client terminal 20B has been completed and the session with the client terminal 20B has been put into an open state, the client terminal 20A issues an Activate Session request, and notifies the session management unit 44 of the Activate Session request through the command processing unit 42 (Step S64). Incidentally, when issuing an Activate Session request, the client terminal 20A adds the session ID "1" added into the Get Session Challenge response into the Activate Session request.

When having received the Activate Session request from the client terminal 20A, the information registering unit 54 refers to the slot "1" in which the session ID "1" added into the request has been registered. The information registering unit 54 registers "ON" in the Active flag 52C of the referred-to slot "1", and registers "OFF" in the Establishment flag 52D (Step S65).

In the slot "1", the session ID 52B "1", the Active flag 52C "ON", the Establishment flag 52D "OFF", and the IP address 52E "xxA" of the client terminal 20A are registered in a manner associated with one another (Step S65). Then, upon completion of the registration of the slot "1" (Step S65A), the control unit 55 sends an Activate Session response to the Activate Session request to the client terminal 20A through the command processing unit 42 (Step S66). As a result, the control unit 55 puts the session of the session ID "1" with the client terminal 20A into an open state.

In FIG. 12, when a Get Session Challenge request is issued from a client terminal 20, a session ID 52B, an Active flag 52C, an Establishment flag 52D, and an IP address 52E included in each slot are referred to. Therefore, even if there is a conflict of Get Session Challenge requests from multiple client terminals 20, the server device 3 avoids a situation where the client terminals 20 are assigned the same slot. Furthermore, it is possible to avoid a situation where even though a client terminal 20 issued a Get Session Challenge request first, a session is intercepted by another client terminal 20 which requested later. Then, the server management system 1 can achieve the smooth opening of a session.

Furthermore, for example, the client terminal 20A issues a Get Session Challenge request, and, after performing the processing operation at Steps S51 to S55, issues an Activate Session request. However, even though the client terminal 20A issued a Get Session Challenge request, if the client terminal 20A has not issued an Activate Session request and again issued a Get Session Challenge request for any cause, the assignment control unit 53 assigns a slot in which an Active flag 52C has been set to "OFF", an Establishment flag 52D has been set to "ON", and the same IP address 52E as that of the client terminal 20A has been registered to the client terminal 20A, thereby reusing the slot. As a result, there is avoided a situation where each time the server device 3 receives a Get Session Challenge request from a client terminal 20, the server device 3 assigns the client terminal 20 a different slot every time, and therefore, it is possible to prevent a conventional problem that the number of sessions goes over the limits.

In the second embodiment, upon receipt of a Get Session Challenge request from a client terminal 20, the server device 3 refers to slots sequentially, and determines whether an Active flag 52C which has been registered in the referred-to slot is "OFF". Furthermore, in the second embodiment, when the Active flag 52C is "OFF", the server device 3 determines whether an Establishment flag 52D which has been registered in the referred-to slot is "OFF". Moreover, in the second embodiment, when the Establishment flag 52D is "OFF", the server device 3 assigns the referred-to slot to the client terminal 20 which issued the Get Session Challenge request. Furthermore, in the second embodiment, the server device 3 registers a session ID 52B of the session and an IP address 52E in the slot, and registers "ON" in the Establishment flag 52D. Namely, in the second embodiment, the server device 3 controls assignment of a slot to a client terminal 20 which issued a Get Session Challenge request on the basis of a result of reference to an Active flag 52C and an Establishment flag 52D of each slot. Consequently, the server device 3 can avoid redundant assignment of the same slot to multiple client terminals 20 having a conflict of Get Session Challenge requests.

Furthermore, in the second embodiment, upon receipt of an Activate Session request from a client terminal 20, the server device 3 refers to slots sequentially, and determines whether a session ID 52B which has been registered in the referred-to slot is identical to a session ID included in the request. In the second embodiment, when it is the same session ID, the server device 3 puts the session with the client terminal 20 which issued the Activate Session request into an open state by using the session ID of the session ID 52B which has been registered in the referred-to slot. Consequently, the server device 3 can avoid redundant assignment of the same slot to multiple client terminals 20 having a conflict of Get Session Challenge requests, thereby avoiding a situation where even though a client terminal 20 issued a Get Session Challenge request first, a session is intercepted by another client terminal 20 which requested later. Then, it is possible to achieve the smooth opening of a session.

In the second embodiment, when the Establishment flag 52D which has been registered in the referred-to slot is "ON", the server device 3 determines whether an IP address which has been registered in the referred-to slot is identical to an IP address of a client terminal 20 which issued the Get Session Challenge request. In the second embodiment, when it is the same IP address, the server device 3 assigns the slot to the client terminal 20 which issued the request. Namely, even if the server device 3 has again received a Get Session Challenge request from the same client terminal 20 before completion of Activate Session, the server device 3 reuses the slot which has been assigned to the client terminal 20. Consequently, the server device 3 can avoid a situation where multiple slots are sequentially assigned to the same client terminals 20.

Furthermore, in the second embodiment, when the IP address which has been registered in the slot is not identical to the IP address of the client terminal 20 which issued the Get Session Challenge request, the server device 3 assigns another slot to the client terminal 20 which issued the request. Consequently, the server device 3 can avoid a situation where multiple client terminals 20 having a conflict of Get Session Challenge requests are assigned the same slot.

In the second embodiment, upon receipt of an Activate Session request, the server device 3 refers to slots sequentially, and determines whether a session ID 52B which has been registered in the referred-to slot is identical to a session ID added into the request. In the second embodiment, when it is the same session ID, the server device 3 puts a session with the client terminal 20 using a session corresponding to the session ID into an open state.

In the second embodiment, upon receipt of a Close Session command from a client terminal 20, the server device 3 refers to slots sequentially, and determines whether a session ID which has been registered in the referred-to slot is identical to a session ID added into the Close Session command. In the second embodiment, when it is the same session ID, the server device 3 puts the session with the client terminal 20 corresponding to the session ID into a close state.

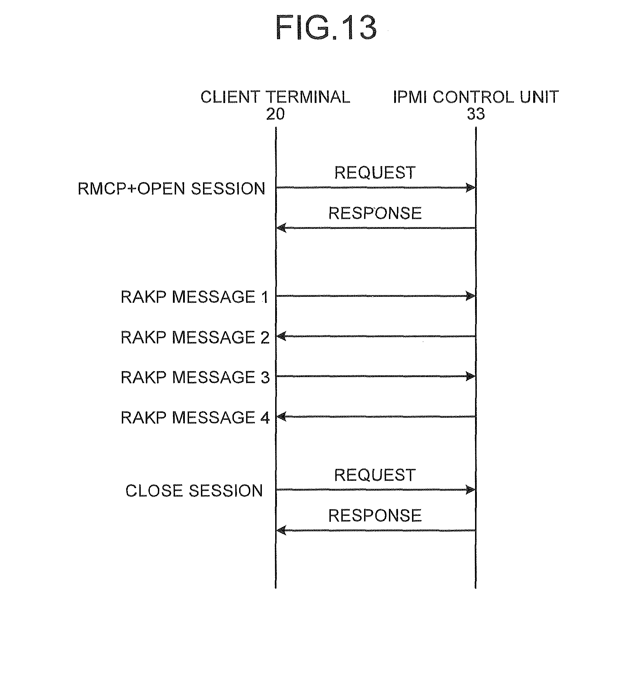

Incidentally, in the second embodiment, there is described an example of a V1.5 IPMI session; a V2.0 IPMI session can also be adopted. FIG. 13 is an explanatory diagram illustrating an example of a V2.0 IPMI session sequence. V2.0 RMCP+Open Session illustrated in FIG. 13 corresponds to V1.5 Get Session Challenge as a session start request. Furthermore, V2.0 RAKP Message 1, V2.0 RAKP Message 2, V2.0 RAKP Message 3, and V2.0 RAKP Message 4 correspond to V1.5 Activate Session as a session execute request. Upon receipt of an RMCP+Open Session request from a client terminal 20, the assignment control unit 53 of the session management unit 44 assigns an empty slot whose Active flag and Establishment flag are both "OFF" to the client terminal 20. Furthermore, the information registering unit 54 registers a new session ID and an IP address in the slot, and registers "ON" in the Establishment flag 52D. Consequently, even if the session management unit 44 has received an RMCP+Open Session request from another client terminal 20, the assignment control unit 53 assigns slots whose Establishment flag 52D has been set to "OFF" to multiple client terminals 20. Furthermore, the assignment control unit 53 can avoid redundant assignment of a slot whose Establishment flag 52D has been set to "ON" to multiple client terminals 20.

Furthermore, in the second embodiment, there is described an example where a session is established by executing an IPMI command consisting of two steps: Get Session Challenge and Activate Session. However, any systems that establish a session by executing not only IPMI but also a two-step command can achieve the same effects.

Moreover, components of the units illustrated in the drawings do not always have to be physically configured as illustrated in the drawings. Namely, the specific forms of division and integration of the units are not limited to those illustrated in the drawings, and all or some of the units can be configured to be functionally or physically divided or integrated in arbitrary units depending on respective loads and use conditions, etc.

Furthermore, all or any part of various processing functions implemented in each device can be executed on a CPU (Central Processing Unit) (or a microcomputer, such as an MPU (Micro Processing Unit) and an MCU (Micro Controller Unit)). Moreover, it goes without saying that all or any part of the various processing functions can be executed on a program that is analyzed and executed by the CPU (or a microcomputer, such as an MPU and an MCU) or on hardware with wired logic.

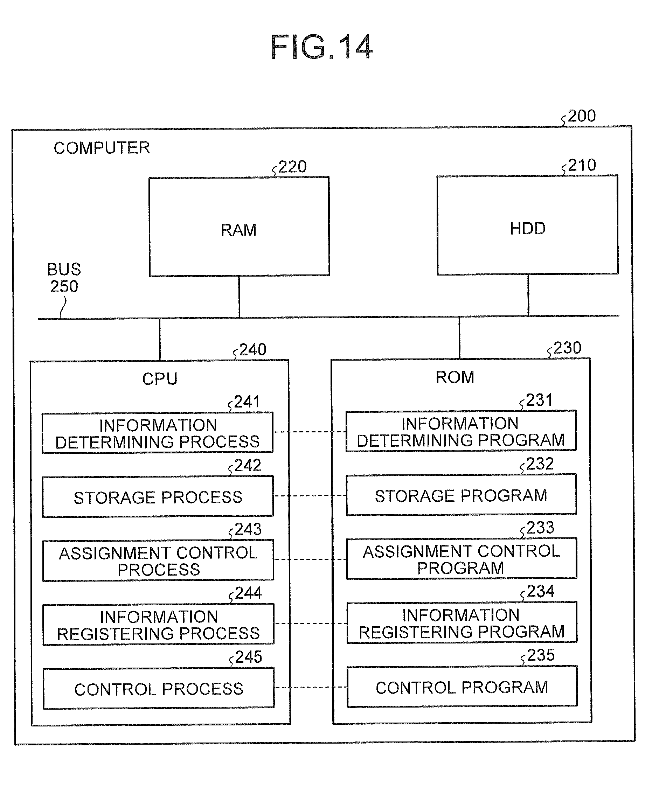

Incidentally, the various processes described in the present embodiment can be realized by causing a computer to execute a program prepared in advance. An example of a computer that executes a program having the same functions as those described in the above embodiment is explained below with reference to FIG. 14. FIG. 14 is an explanatory diagram illustrating a computer that executes a session establishing program.

As illustrated in FIG. 14, a computer 200 as a session establishing program is composed of an HDD (Hard Disk Drive) 210, a RAM (Random Access Memory) 220, a ROM (Read Only Memory) 230, and a CPU 240 which are connected by a bus 250.

A session establishing program, which fulfills the same functions as those described in the above embodiment, has been stored in the ROM 230 in advance. As illustrated in FIG. 14, the session establishing program includes an information determining program 231, a storage program 232, an assignment control program 233, an information registering program 234, and a control program 235. Incidentally, the programs 231 to 235 can be arbitrarily integrated or divided like the components of the session establishing device 1 illustrated in FIG. 1.

The CPU 240 reads out these programs 231 to 235 from the ROM 230, and executes the read programs. Then, as illustrated in FIG. 14, the programs 231 to 235 function as an information determining process 241, a storage process 242, an assignment control process 243, an information registering process 244, and a control process 245, respectively.

Upon receipt of a session start request from a terminal unit, the CPU 240 determines whether there is any session whose establishment-finished information indicates not yet established. When there is a not-yet-established session, the CPU 240 further determines whether under-establishment information corresponding to the session indicates not in the process of establishment. Furthermore, the CPU 240 registers session identifying information and terminal identifying information in a manner associated with the session not in the process of establishment, and replaces the under-establishment information of the session with in the process of establishment. Namely, the computer 200 controls assignment of a session to a terminal unit which issued a session start request on the basis of a result of reference to establishment-finished information and under-establishment information of each session. Consequently, even if there is a conflict of session start requests, by referring to under-establishment information, establishment-finished information, session identifying information, and terminal identifying information which have been registered, the computer 200 can avoid a situation where the same session is redundantly assigned to multiple terminal units.

Furthermore, upon receipt of a session execute request from a terminal unit, the CPU 240 determines whether there is any session having session identifying information identical to session identifying information included in the session execute request. When there is a session having the same session identifying information, the CPU 240 establishes a session with the terminal unit which issued the session execute request by using the session identifying information. Consequently, the computer 200 can avoid redundant assignment of the same session to multiple terminal units having a conflict of session start requests, thereby avoiding a situation where even though a terminal unit issued a session start request first, a session is intercepted by another terminal unit which requested later. Then, the computer 200 can achieve smooth session establishment.

**[Explanation of Reference]**

| | |
|---|---|
| 1 | session establishing device |
| 1A | server management system |
| 2 | terminal unit |
| 11 | information determining unit |
| 12 | storage unit |
| 13 | assignment control unit |
| 14 | information registering unit |
| 15 | control unit |
| 20 | client terminal |
| 20A | client terminal |
| 20B | client terminal |
| 51 | information determining unit |
| 52 | slot storage unit |
| 53 | assignment control unit |
| 53A | terminal determining unit |
| 54 | information registering unit |
| 55 | control unit |

## Claims

1. A session establishing device comprising:
a storage unit that stores therein establishment-finished information indicating whether a session has already been established or not and under-establishment information indicating whether a session is in the process of establishment or not in a manner associated with each other with respect to each session used by a terminal unit;
an information determining unit that, when having received a session start request from a terminal unit, determines whether there is any session whose establishment-finished information indicates not-yet-established in the storage unit, and, when there is a not-yet-established session, determines whether under-establishment information corresponding to the session indicates not in the process of establishment;
an assignment control unit that, when the under-establishment information corresponding to the session indicates not in the process of establishment, assigns the session to the terminal unit which issued the session start request;
an information registering unit that, when the session has been assigned to the terminal unit which issued the session start request, registers session identifying information identifying the session and terminal identifying information identifying the terminal unit in a manner associated with the session and changes content of the under-establishment information corresponding to the session to in the process of establishment; and
a control unit that, when having received a session execute request from a terminal unit, determines whether there is any session having session identifying information identical to session identifying information included in the session execute request in the storage unit, and, when there is a session having the same session identifying information, establishes a session with the terminal unit which issued the session execute request by using the session identifying information.

2. The session establishing device according to claim 1, wherein
the assignment control unit includes a terminal determining unit that, when the under-establishment information corresponding to the session indicates in the process of establishment, determines whether terminal identifying information corresponding to the session is identical to terminal identifying information of the terminal unit which issued the session start request, and
when the terminal identifying information corresponding to the session is identical to the terminal identifying information of the terminal unit, the assignment control unit assigns the session to the terminal unit which issued the session start request; when the terminal identifying information corresponding to the session is not identical to the terminal identifying information of the terminal unit, the assignment control unit prohibits assignment of the session to the terminal unit which issued the session start request.

3. The session establishing device according to claim 1 or 2, wherein
when the control unit has determined that there is a session having session identifying information identical to session identifying information included in the session execute request, the information registering unit changes content of the under-establishment information corresponding to the session to not in the process of establishment, and changes content of the establishment-finished information corresponding to the session to already established.

4. The session establishing device according to claim 1 or 2, wherein
when having received a session end request from the terminal unit, the control unit determines whether there is any session corresponding to session identifying information included in the session end request in the storage unit, and, when there is a corresponding session, disconnects the session with the terminal unit which issued the session end request relating to the session, and
when there is a session corresponding to session identifying information included in the session end request in the storage unit, the information registering unit erases the terminal identifying information and session identifying information corresponding to the session, and changes content of the establishment-finished information corresponding to the session to not-yet-established.

5. The session establishing device according to claim 1 or 2, wherein
the session start request and the session execute request are commands conforming to specifications for an intelligent platform management interface and commands requesting for establishment of a session with the terminal unit.

6. A session establishing method comprising:
upon receipt of a session start request from a terminal unit, determining whether there is any session whose establishment-finished information indicates not-yet-established in a storage unit by referring to establishment-finished information indicating whether a session has already been established or not stored in the storage unit;
when there is a session indicating not-yet-established in the storage unit, determining whether the session is in the process of establishment by referring to under-establishment information stored in the storage unit, the under-establishment information indicating whether a session is in the process of establishment or not;
when the under-establishment information corresponding to the session indicates not in the process of establishment, assigning the session to the terminal unit which issued the session start request;
when the session has been assigned to the terminal unit which issued the session start request, registering session identifying information identifying the session and terminal identifying information identifying the terminal unit in a manner associated with the session and changing content of the under-establishment information corresponding to the session to in the process of establishment; and
upon receipt of a session execute request from a terminal unit, determining whether there is in the storage unit any session having session identifying information identical to session identifying information included in the session execute request, and, when there is a session having the same session identifying information, establishing a session with the terminal unit which issued the session execute request by using the session identifying information.

7. A session establishing program causing a computer to execute:
storing establishment-finished information indicating whether a session has already been established or not and under-establishment information indicating whether a session is in the process of establishment or not in a storage unit in a manner associated with each other with respect to each session used by a terminal unit;
upon receipt of a session start request from a terminal unit, determining whether there is any session whose establishment-finished information indicates not-yet-established in a storage unit, and, when there is a session indicating not-yet-established, determining whether under-establishment information corresponding to the session indicates not in the process of establishment;
when the under-establishment information corresponding to the session indicates not in the process of establishment, assigning the session to the terminal unit which issued the session start request;
when the session has been assigned to the terminal unit which issued the session start request, registering session identifying information identifying the session and terminal identifying information identifying the terminal unit in a manner associated with the session and changing content of the under-establishment information corresponding to the session to in the process of establishment; and
upon receipt of a session execute request from a terminal unit, determining whether there is any session having session identifying information identical to session identifying information included in the session execute request in the storage unit, and, when there is a session having the same session identifying information, establishing a session with the terminal unit which issued the session execute request by using the session identifying information.
